# EUROPEAN PATENT SPECIFICATION

(11) **EP 0 587 111 B1**
(45) Date of publication and mention of the grant of the patent: **03.02.1999**
(21) Application number: 93114326.7
(22) Date of filing: 07.09.1993
(51) Int. Cl.: G11B 7/125, G11B 7/00, G11B 7/08, G11B 7/09

(54) **Optical information recording/reproducing apparatus**
Optisches Informationsaufzeichen- und Wiedergabegerät
Appareil d'enregistrement et de reproduction d'information optique

(30) Priority: 08.09.1992 JP 239159/92
(43) Date of publication of application: 16.03.1994
(73) Proprietor: PIONEER ELECTRONIC CORPORATION, Meguro-ku Tokyo (JP)
(72) Inventor: Nishimura, Shinsuke, c/o Pioneer Tokorazawa Plant, Tokorazawa-City, Saitama (JP); Inoue, Akiyoshi, c/o Pioneer Tokorazawa Plant, Tokorazawa-City, Saitama (JP); Kono, Mutsumi, c/o Pioneer Tokorazawa Plant, Tokorazawa-City, Saitama (JP)
(74) Representative: Klingseisen, Franz, Dipl.-Ing.

(56) References cited:
- EP-A- 0 221 782
- EP-A- 0 477 892
- EP-A- 0 504 829

## Description

The present invention relates to an apparatus for optically recording/reproducing information on and from a recordable and reproducible medium such as R-CD (Recordable Compact Disk), and more particularly to an optical information recording/reproducing apparatus which calibrates the level of recording laser power with which an optical disk is irradiated.

Apart from the conventionally known CD (Compact Disk), there is known a R-CD as an optical disk on which a user can perform recording. When information is recorded on a R-CD by a R-CD recorder, a laser diode for recording is used. Since the recording quality depends on physical and optical characteristics of the R-CD, the wavelength of a used laser, and so on, the laser diode must be calibrated to an appropriate recording laser power level.

In conventional optical information recording/reproducing apparatuses, original appropriate emitting power may not be obtained due to external causes such as a stained objective lens of an optical pickup and defects such as deterioration of the laser diode resulting from aging changes. In this case, even if the recording power is set to a maximum value, an optimal value cannot be obtained, whereby recording is performed consequently with insufficient recording laser power, possibly resulting in producing disks deviated from the standard, which may cause data failure and so on upon reproduction. A further problem is that such a state is difficult to be detected.

The present invention has been made to solve the above problems, and its object is to provide an optical information recording/reproducing apparatus adapted to calibrate the level of recording laser power to be emitted to an optical disk, which detects a recording laser power level from reproduced waveform of a previously recorded calibration signal to determine whether maintenance is required for an optical pickup and so on as well as to previously prevent optical disks deviated from the standard from being produced.

This object is achieved by the features in claim 1.

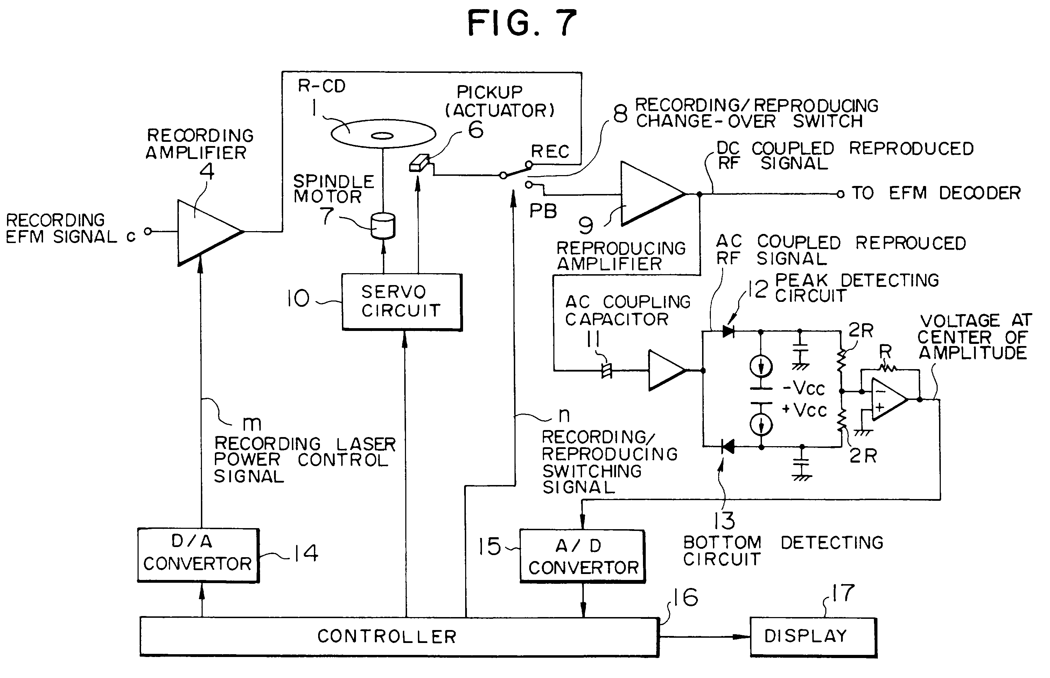

According to a first aspect of the present invention, there is provided an optical information recording/reproducing apparatus which has a function of calibrating a power value of a recording laser beam which is emitted to an optical disk, comprising, as shown in Fig. 7, determination means 16 for determining that a recording laser power value is optimal when the recording laser power lies within a predetermined range, and zero for example is assumed by a voltage at the center of the amplitude of a reproduced signal which has been recorded with the recording laser power (the center voltage may be set at an appropriate value ascertained by experiments).

According to a second aspect of the present invention, there is provided a recordable and reproducible optical information recording/reproducing apparatus which has a function of calibrating a power value of a recording laser beam which is emitted to an optical disk, comprising alarming means 17 for alarming when no optimal value is detected for the recording laser power upon reproduction.

With the optical information recording/reproducing apparatus according to the first aspect of the present invention, as shown in Fig. 7, in an operation of detecting an optimal value for the recording laser power, that is, in a detection operation where an optimal value is determined to be a recording laser power value obtained when zero is indicated by a voltage at the center of the amplitude of a reproduced signal, which has been recorded with recording laser power increased in a step manner, the determination means (controller in Fig. 7) 16 determines that a recording laser power value is optimal when the recording laser power value lies within a predetermined range, and zero is indicated by a voltage at the center of the amplitude of a reproduced signal which has been recorded with the recording laser power value.

Thus, for example, if the optimal value cannot be obtained even at the time the recording laser power has been changed to its maximum value, an alarm is generated to the user for announcing that the recording laser power is insufficient, the recording is halted, or other processing is performed, based on a voltage value at the center of the amplitude of the reproduced recording signal at that time, thus allowing the user to determine whether maintenance is required for the pickup and so on, or to previously prevent optical disks deviated from the standard from being produced.

With the optical information recording/reproducing apparatus according to the second aspect of the present invention, as shown in Fig. 7, if no recording laser power value is determined to be optimal in an operation of detecting an optimal value for the recording laser power, for example, if no optimal value is obtained even at the time the recording laser power has been changed to its maximum value, the alarming means (display in Fig. 7) 17 generates a warning to a user for announcing that the recording laser power is insufficient, the recording is halted, or other processing is performed, based on a voltage value at the center of the amplitude of a reproduced signal which has been recorded with the maximum recording laser power, thus allowing the user to determine whether maintenance is required for the pickup and so on, or to previously prevent optical disks deviated from the standard from being produced.
Figs. 1A - 1E are timing charts showing an exemplary method of calibrating recording laser power in the prior art;
Fig. 2 is a diagram for generally explaining an eye pattern;
Figs. 3A - 3C are waveform diagrams showing recording laser power and reproduced waveforms in a conventional method of calibrating recording laser power;
Fig. 4 comprises explanatory diagrams showing eye patterns of portions of a DC coupled reproduced signal indicated in Fig. 1E;
Fig. 5 is a block diagram showing the configuration of a conventional optical recording/reproducing apparatus (R-CD player);
Fig. 6 is a flow chart showing a reproducing operation for calibration performed by a prior art example;
Fig. 7 is a block diagram showing the configuration of an optical information recording/reproducing apparatus (R-CD player) according to a first embodiment of the present invention;
Fig. 8 is a flowchart showing a recording operation for calibration performed by the first embodiment;
Fig. 9 is a flowchart showing a reproducing operation for calibration performed by the first embodiment;
Fig. 10 is a flowchart showing a disk check operation performed by the first embodiment;
Fig. 11 is a block diagram showing the configuration of an optical information recording/reproducing apparatus (R-CD player) according to a second embodiment of the present invention;
Figs. 12A - 12E are timing charts showing an exemplary method of calibrating recording laser power according to the second embodiment;
Fig. 13 shows waveform charts used for explaining eye patterns of portions of a DC coupled reproduced signal indicated in Fig. 12E;
Fig. 14 is a flowchart showing a recording operation for calibration performed by the second embodiment;
Fig. 15 is a flowchart showing a reproducing operation for calibration performed by the second embodiment;
Fig. 16 is a block diagram showing the configuration of an optical information recording/reproducing apparatus (R-CD player) according to a third embodiment of the present invention;
Figs. 17A - 17G are timing charts showing an exemplary method of calibrating recording laser power according to the third embodiment;
Fig. 18 shows waveform charts used for explaining eye patterns of portions of a DC coupled reproduced signal indicated in Fig. 17G;
Fig. 19 is a flowchart showing a recording operation for calibration performed by the third embodiment; and
Fig. 20 is a flowchart showing a reproducing operation for calibration performed by the third embodiment.

Before describing in detail embodiments of the present invention, an exemplary conventional method of calibrating recording laser power will be explained with reference to the accompanying drawings.

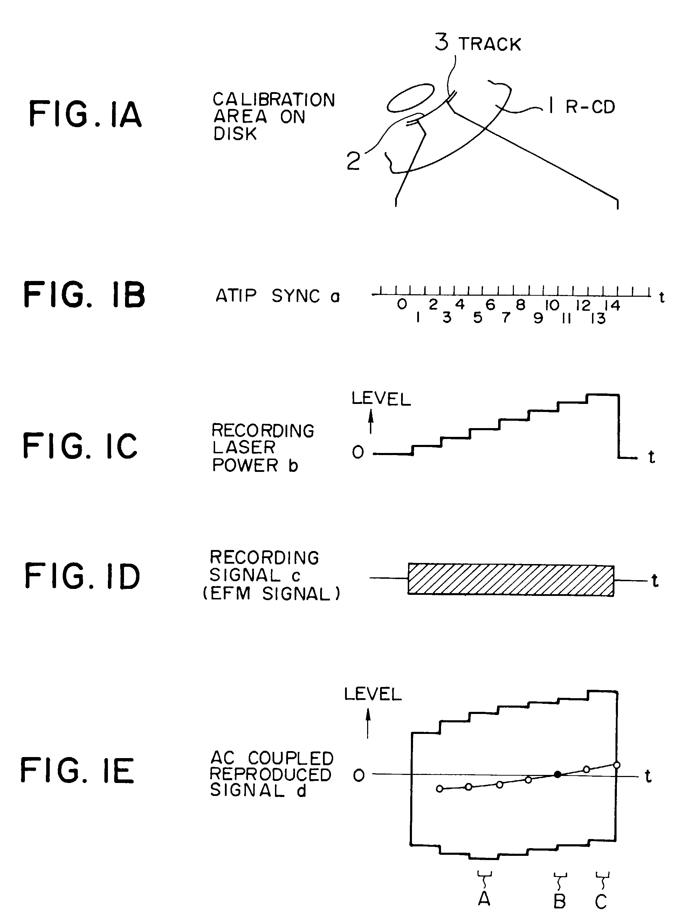

Referring first to Figs. 1A - 1E, a conventional calibration method records, as shown in Fig. 1A, a recording signal c shown in Fig. 1D on a dedicated track 2 provided on a R-CD based on an ATIP (Absolute Time In Pregroove) sync (synchronizing signal) a (see Fig. 1E), while changing the recording power level of the recording signal c as shown in Fig. 1C. Thereafter, when the signal recorded on the track 2 is read out for reproduction, and direct current components of the reproduced EFM RF (Eight to Fourteen Modulation Radio Frequency) signal is removed (by an AC coupling capacitor), an AC coupled reproduced signal d is produced as shown in Fig. 1E. The calibration is performed so as to bring the recording laser power to a value obtained when the center of the amplitude of the AC coupled reproduced signal d substantially coincides with the zero level.

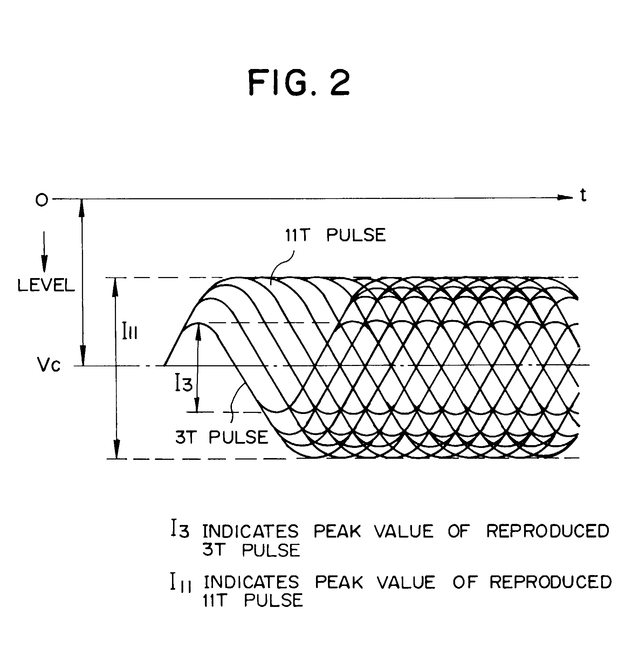

A general explanatory diagram of an eye pattern is shown in Fig. 2 for reference. Specifically, the recording signal (EFM signal) c is composed of nine kinds of pulse components having pulse durations ranging from 3T to 11T, where T is a reference pulse having the value of 1/4.3218×10⁻⁶. When this signal is reproduced, its reproduced waveform is as shown in Fig. 2. The waveform is sliced at the position of Vc to shape the shown waveform into a rectangular wave. The position of Vc is the center of the amplitude of an 11T pulse in the reproduced wave, so that pulses 3T - 10T must have the respective centers of amplitudes coincident with each other in order to precisely waveform-shape the pulses 3T - 10T (practically, there can be cases where a better reproduction signal is obtained when the centers of amplitudes are shifted slightly).

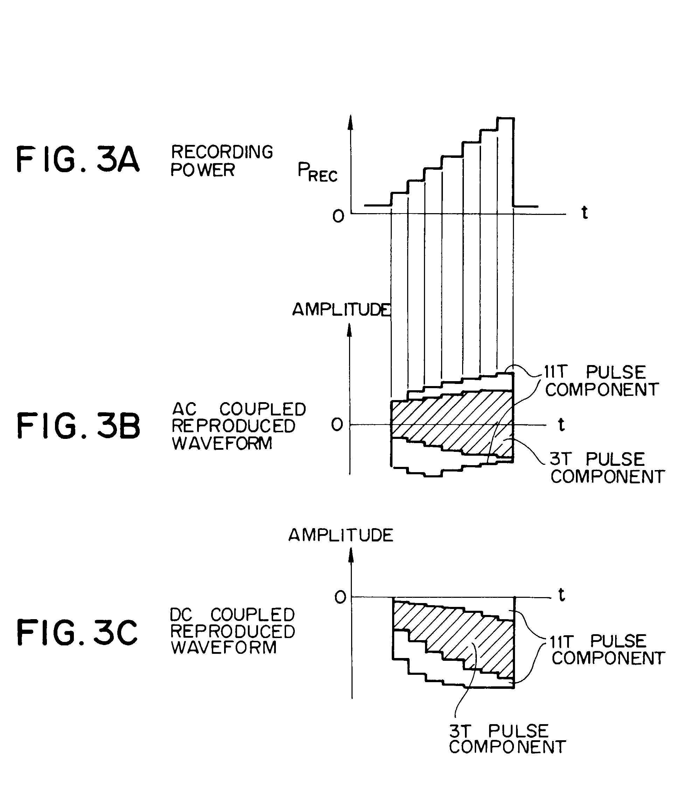

Figs. 3A - 3C show recording power PREC for the calibration and its reproduced waveforms (AC coupled and DC coupled). As illustrated, when the recording signal (EFM signal) c is recorded while increasing the recording laser power in a step manner, and then reproduced, the reproduced signals as shown in Figs. 3B, 3C can be obtained. In the charts, the waveform having a larger amplitude represents an 11T pulse component.

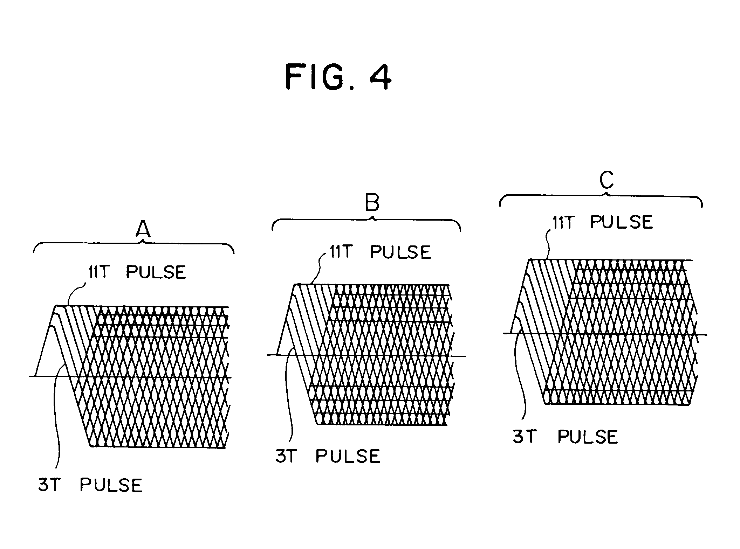

Eye patterns of portions A, B, C in Fig. 1E are shown in Fig. 4. As is understood from Fig. 4, the portion B indicates an optimal power value.

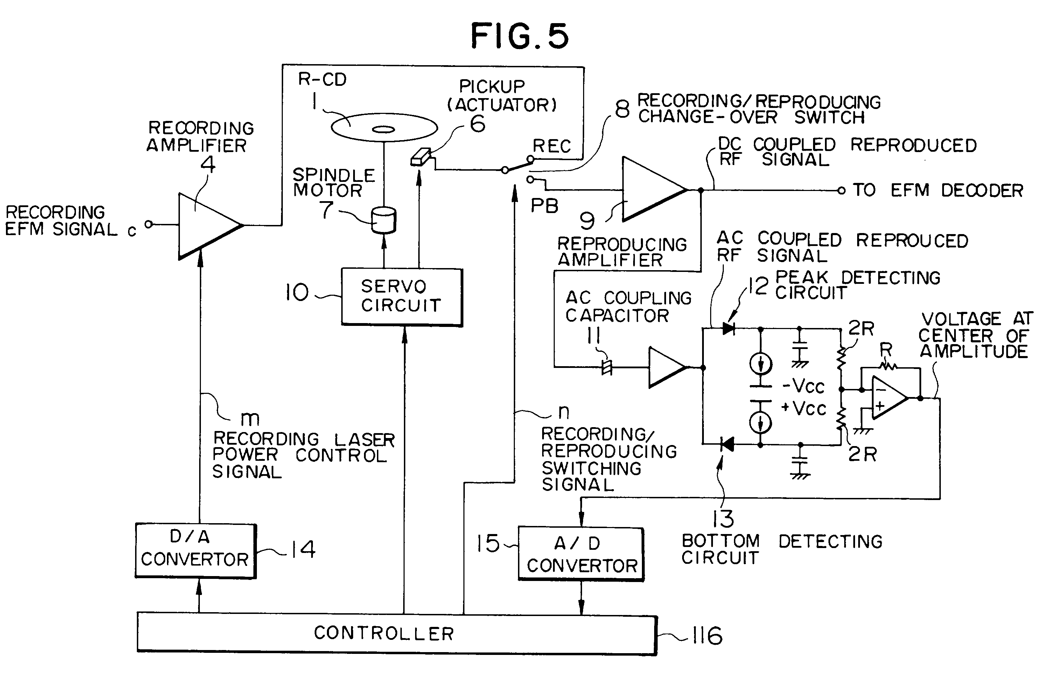

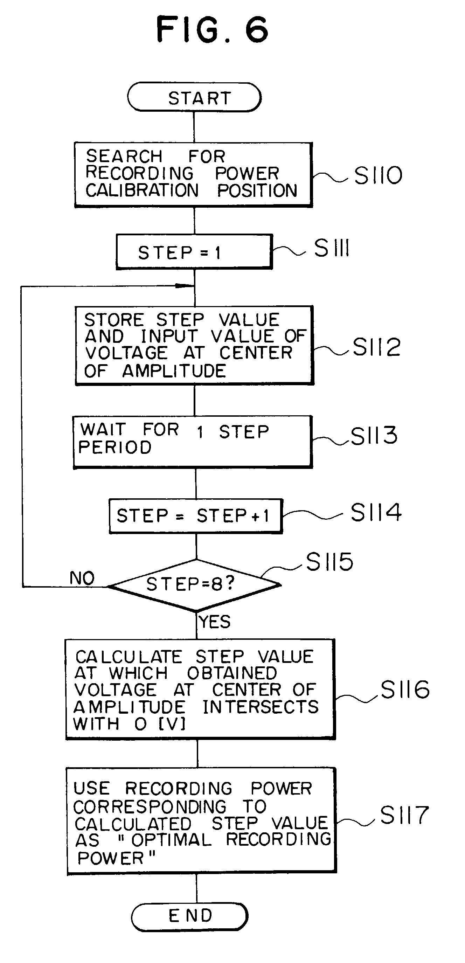

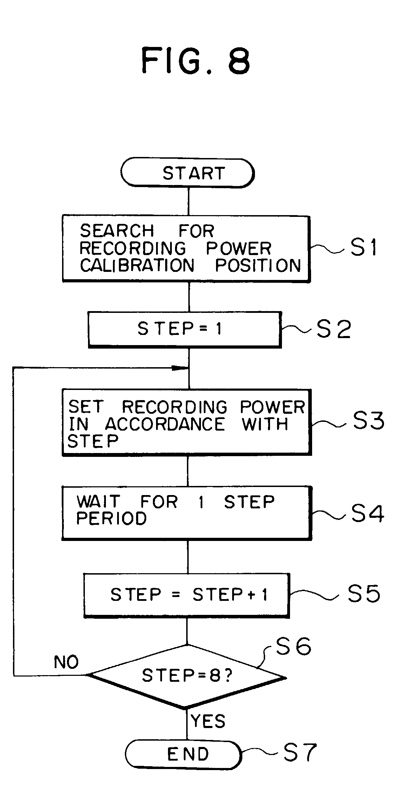

Now, the configuration of a conventional optical information recording/reproducing apparatus is shown in Fig. 5. Fig. 5 shows in a block form a main portion of a conventional recordable and reproducible R-CD player for performing calibration. Fig. 8 is a flowchart showing a recording operation for calibration which is also performed by the conventional R-CD player of Fig. 5, and Fig. 6 is a flowchart showing a reproducing operation for calibration.

In recording for the calibration, the R-CD player operates in the following manner. A R-CD 1 is rotated by a spindle motor 7 under control of a servo circuit 10. At this time, a pickup 6 is set at a position corresponding to a track 2 under control of the servo circuit 10. The recording EFM signal c is supplied to a recording amplifier 4 to drive a laser diode in the pickup 6. Recording laser power b at this time is changed as shown in Fig. 1C by variably controlling the recording amplifier 4 with a recording laser power control signal m supplied through a controller (servo mechanism control microprocessor) 116 and a D/A convertor 14. The above control algorithm is represented by steps S1 - S7 in Fig. 8.

In reproduction for the calibration, after a recording/reproducing change-over switch 8 is switched to a PB side, and a signal read by the pickup 6 is amplified by a reproducing amplifier 9, a reproduced RF signal is outputted to an EFM decoder. The reproduced RF signal outputted from the reproducing amplifier 9 has its direct current components cut by an AC coupling capacitor 11, and is subjected to detection of a voltage at the center of the amplitude thereof through a peak detecting circuit 12 and a bottom detecting circuit 13. A detected voltage at the center of the amplitude is supplied to the controller 116 through an A/D convertor 15 for calculating an optimal power value. The above control algorithm is represented by steps S110 - S117 in Fig. 6. In the conventional optical information recording/reproducing apparatus as described above, original emitting power of the laser may not occasionally be obtained due to external causes such as a stained objective lens of the optical pickup 6 and defects such as deterioration of the laser diode caused by aging changes, as described above. In such a situation, even if the recording power is set to its maximum value, an optimal value cannot be obtained, whereby recording is performed with the recording laser power being left insufficient, possibly resulting in producing disks deviated from the standard, which may cause data failure and so on upon reproduction. A further problem is that it is difficult to detect such a state of insufficient recording laser power.

Next, embodiments according to the present invention will be explained with reference to the accompanying drawings.

### First Embodiment

Fig. 7 shows the configuration of an optical information recording/reproducing apparatus according to the first embodiment of the present invention. In Fig. 7, like parts appearing in Fig. 5 are designated by the same reference numerals.

The optical information recording/reproducing apparatus of this embodiment has a substantially identical configuration to the prior art example shown in Fig. 5. However, this embodiment differs from the prior art example in that a controller 16 determines that recording laser power presents an optimal value when the recording laser power is within a predetermined range, and zero is indicated by a voltage at the center of the amplitude of a reproduced signal which has been recorded with the recording laser power, and that a display 17 is provided in the apparatus for announcing that the recording laser power is at an optimal value.

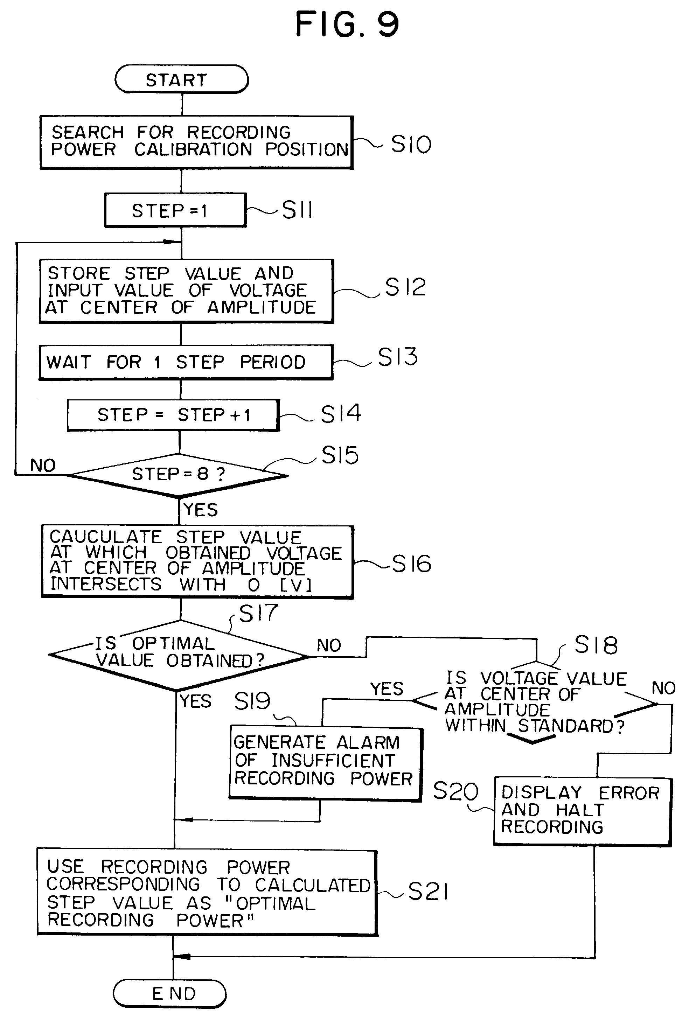

Fig. 8 is a flowchart showing a recording operation for calibration performed by the optical information recording/reproducing apparatus of this embodiment, and Fig. 9 is a flowchart showing a reproducing operation performed for calibration.

In recording for the calibration, a R-CD 1 is rotated by a spindle motor 7 under control of a servo circuit 10, and a recording EFM signal c is supplied to a recording amplifier 4 to drive a laser diode in a pickup 6, similarly to the prior art example. Recording laser power b at this time is changed as shown in Fig. 1C by variably controlling the recording amplifier 4 with a recording laser power control signal m supplied through a controller (servo mechanism control microprocessor) 16 and a D/A convertor 14. The above control algorithm is represented by steps S1 - S7 in Fig. 8.

In the calibration upon reproduction, after a recording/reproducing change-over switch 8 is switched to a PB side, and a signal read by the pickup 6 is amplified by a reproducing amplifier 9, a reproduced RF signal from the reproducing amplifier 9 is outputted to an EFM decoder. The reproduced RF signal outputted from the reproducing amplifier 9 has its direct current components cut by an AC coupling capacitor 11, and is subjected to detection of a voltage at the center of the amplitude thereof through a peak detecting circuit 12 and a bottom detecting circuit 13. A detected voltage at the center of the amplitude is supplied to the controller 16 through an A/D convertor 15 for calculating an optimal power value. The above control algorithm is represented by steps S10 - S16 in Fig. 9.

It is determined at step S17 whether or not an optimal value was obtained. Specifically, recording laser power is determined as an optimal value if it is within a predetermined range of recording laser power values, i.e., with a STEP value, representative of a recording laser power level, remaining between 1 - 7, and a zero level is indicated by a voltage at the center of the amplitude of a reproduced AC coupled RF signal which has previously been recorded by the recording laser power. When an optimal value is not obtained, it is determined at step S18 whether or not the voltage at the center of the amplitude is within a predetermined standard. If the voltage is within the standard, an alarm is displayed at step S19 informing that the recording laser power is insufficient. If the voltage at the center of the amplitude is without the standard, an error is displayed at step S20, followed by halting the recording.

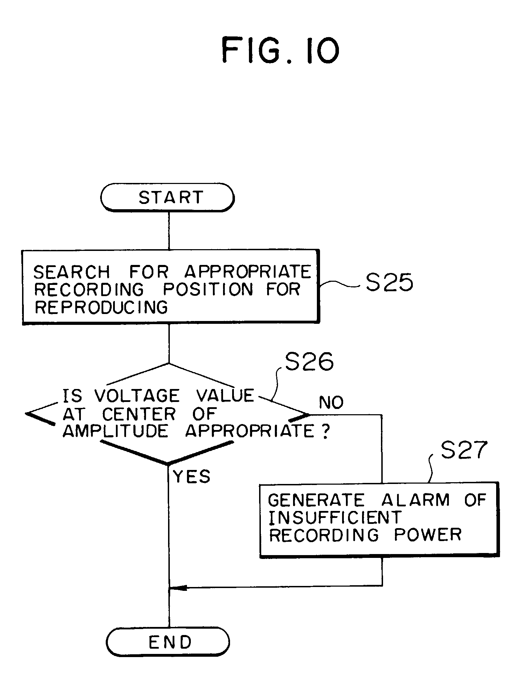

Fig. 10 is a flowchart showing a disk check performed by the optical information recording/reproducing apparatus of this embodiment. As described above, even if an optimal value cannot be obtained at the time the recording laser power has been changed to its maximum value, the user is alarmed that the recording laser power is insufficient, the recording is halted, based on the voltage value at the center of the amplitude of the reproduced signal which has been recorded with the maximum recording laser power, or other processing is performed, thus allowing the user to determine whether maintenance is required for the pickup and so on, or to previously prevent optical disks deviated from the standard from being produced. In addition, defects of the disk due to external causes can also be checked by the procedure shown in Fig. 10.

Specifically, when an appropriate recorded position is searched for and reproduction is started from that position at step S25, it is determined at step S26 whether or not a voltage value at the center of the amplitude of a reproduced signal recorded at that position presents an appropriate value. If it is an inappropriate value, a display is made at step S27 alarming that the recording laser power is insufficient. It will be appreciated that the alarming display may be varied in degree depending on a voltage value at the center of the amplitude.

### Second Embodiment

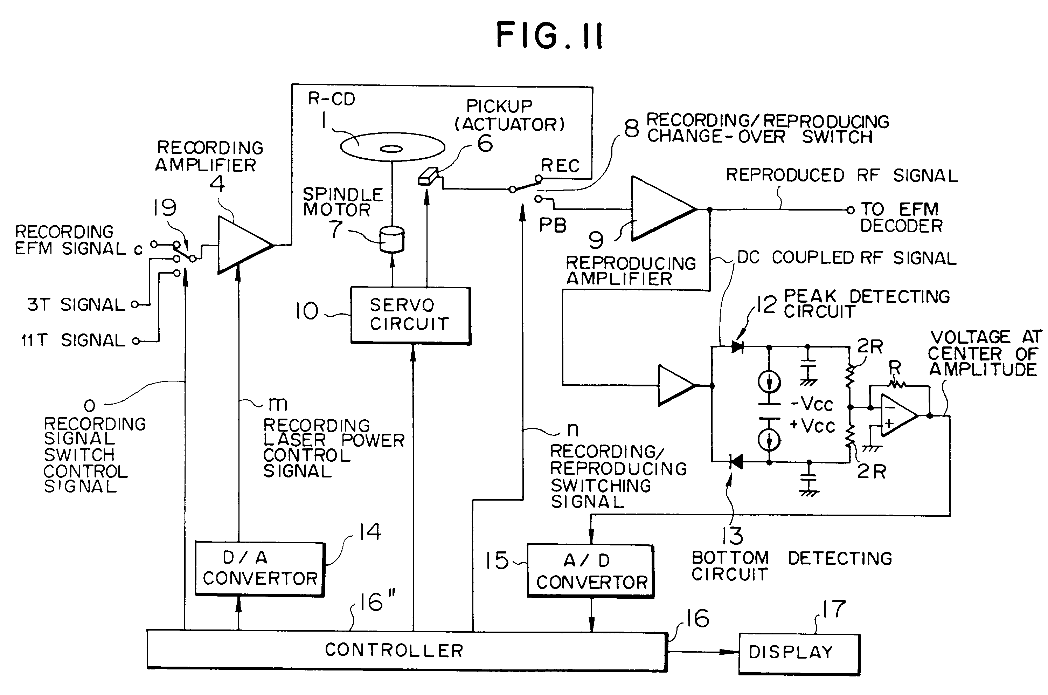

Fig. 11 shows the configuration of an optical information recording/reproducing apparatus according to a second embodiment of the present invention. This embodiment differs from the first embodiment in that a change-over switch 19 is added for switching the recording EFM signal c, 3T signal and 11T signal based on a recording signal switching control signal o from a controller 16'.

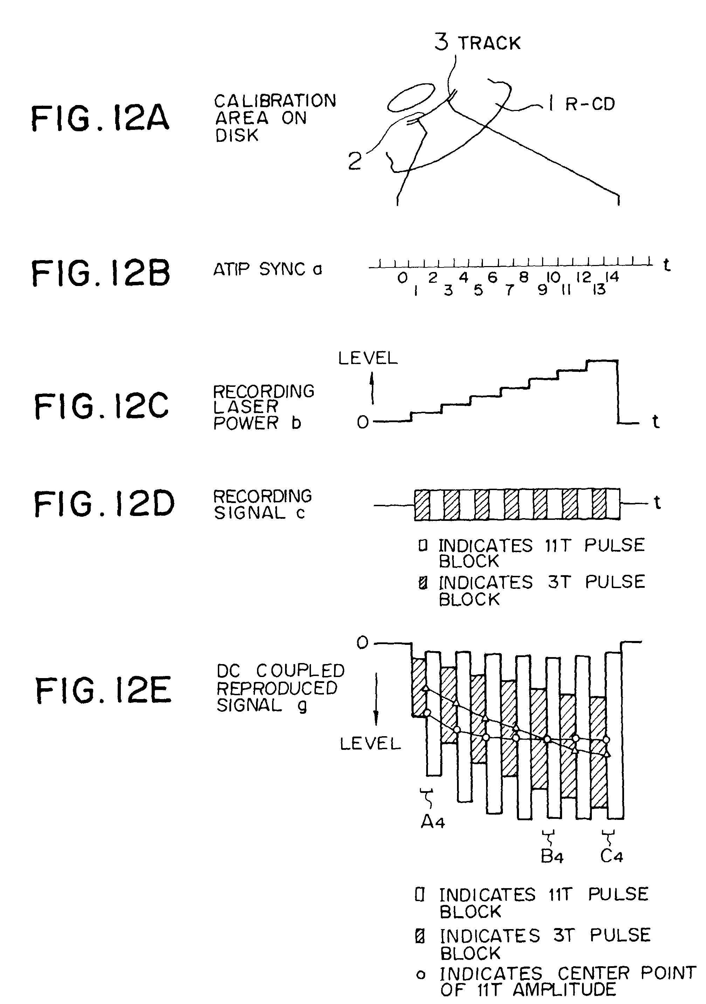

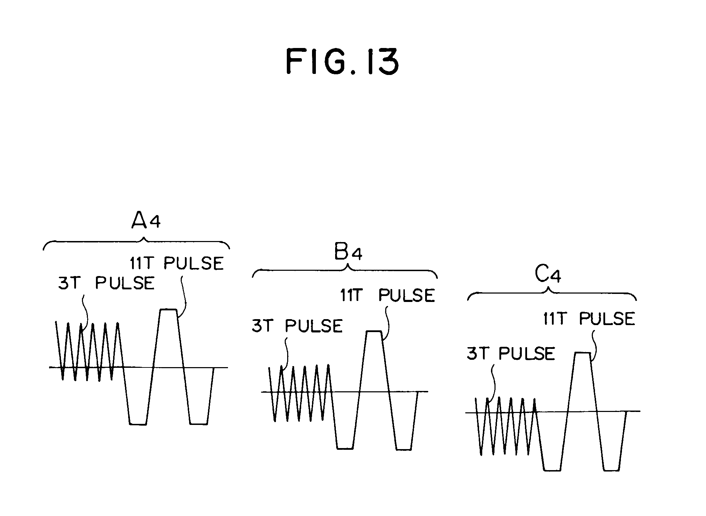

A characteristic operation of this embodiment will be described below with reference to Figs. 12A - 12E. A recording laser beam for calibration is emitted to a calibration area 2 on a R-CD 1 with a plurality of different power values in a time division manner, each for a STEP block, for setting an optimal value to the recording laser power, as shown in Figs. 12D and 12E. In this event, a recording pattern produced by alternately switching the 3T pulse and 11T pulse of the recording FEM signal c is recorded in each STEP block on the calibration area 2. Then, pits recorded on the calibration area 2 are read out for reproduction. An optimal recording laser power value is determined to a value corresponding to an intersecting point (identified by a black circle in Fig. 12E) of an interpolation line coupling voltage values at the centers of the amplitudes in the respective STEP blocks of a reproduced RF signal, corresponding to a recorded portion formed by the 3T pulse, and an interpolation line coupling voltage values at the centers of the amplitudes in the respective STEP blocks of the reproduced RF signal, corresponding to a recorded portion formed by the 11T pulse. Eye patterns of A4, B4, C4 portions in Fig. 12E are shown in Fig. 13. As is understood from Fig. 13, the B4 portion indicates the optimal power value.

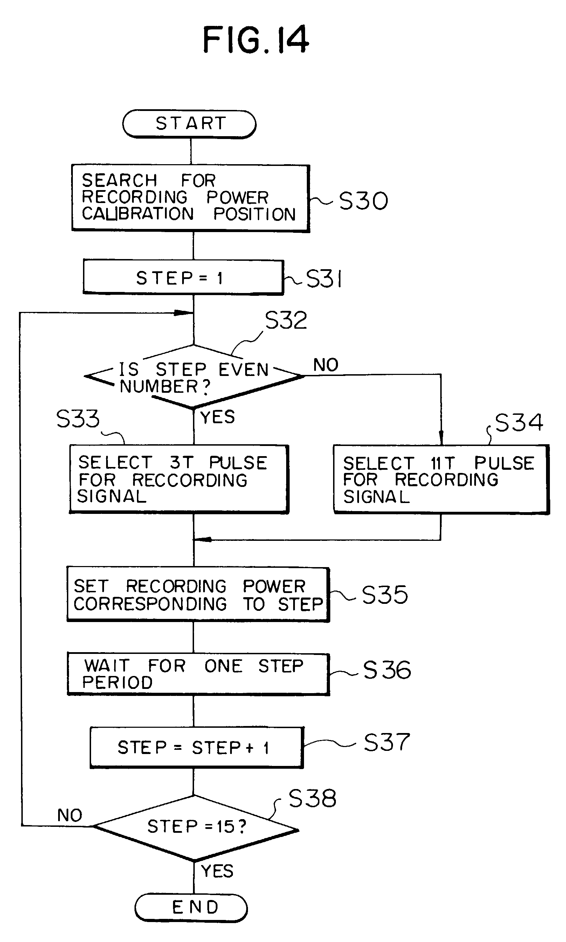

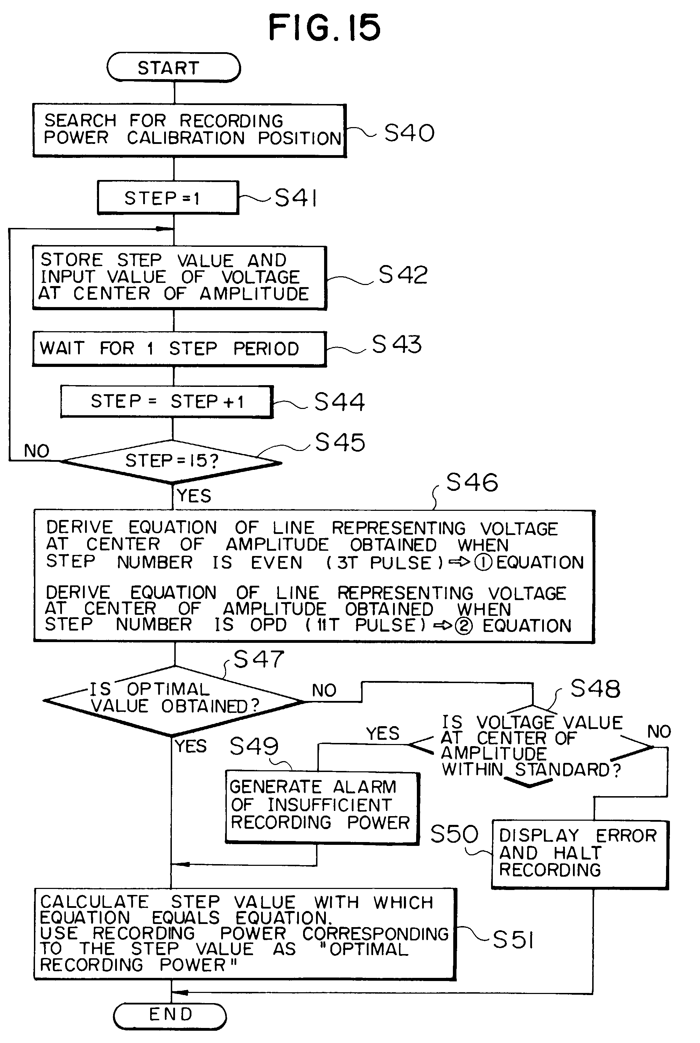

The foregoing operation control is performed by the controller 16' shown in Fig. 11. Specifically, the 3T pulse and 11T pulse are selected by a change-over switch 19 which is switched on the basis of a recording signal switch control signal o from the controller 16'. As for this operation control algorithm, a flow executed upon recording is shown at steps S30 - S38 in Fig. 14, and a flow executed upon reproduction at steps S40 - S51 in Fig. 15.

According to the second embodiment, similar to the first embodiment, when an optimal value cannot be obtained even at the time the recording laser power has been changed to its maximum value (when an intersecting point of the two lines representing voltages at the centers of the amplitudes of the 3T and 11T pulses does not exist), an alarm is generated to the user for warning that the recording laser power is insufficient, the recording is halted, or other processing is performed, based on a voltage value at the center of the amplitude of the reproduced signal which has been recorded with the maximum recording laser power, thus allowing the user to determine whether maintenance is required for the pickup and so on, or to previously prevent optical disks deviated from the standard from being produced. Further, since the 11T pulse and 3T pulse are alternately recorded, and an optimal value of the recording laser power is determined from an intersecting point of the two lines coupling voltages at the centers of the amplitudes of the 11T pulse and 3T pulse (included in the reproduced RF signal) in the respective STEP blocks, a steep change of the line representing the voltages at the centers of the amplitudes of the 3T pulse, which is a high frequency component, allows the intersecting point to be easily detected, thus additionally providing an advantage of obtaining an accurate optimal value.

### Third Embodiment

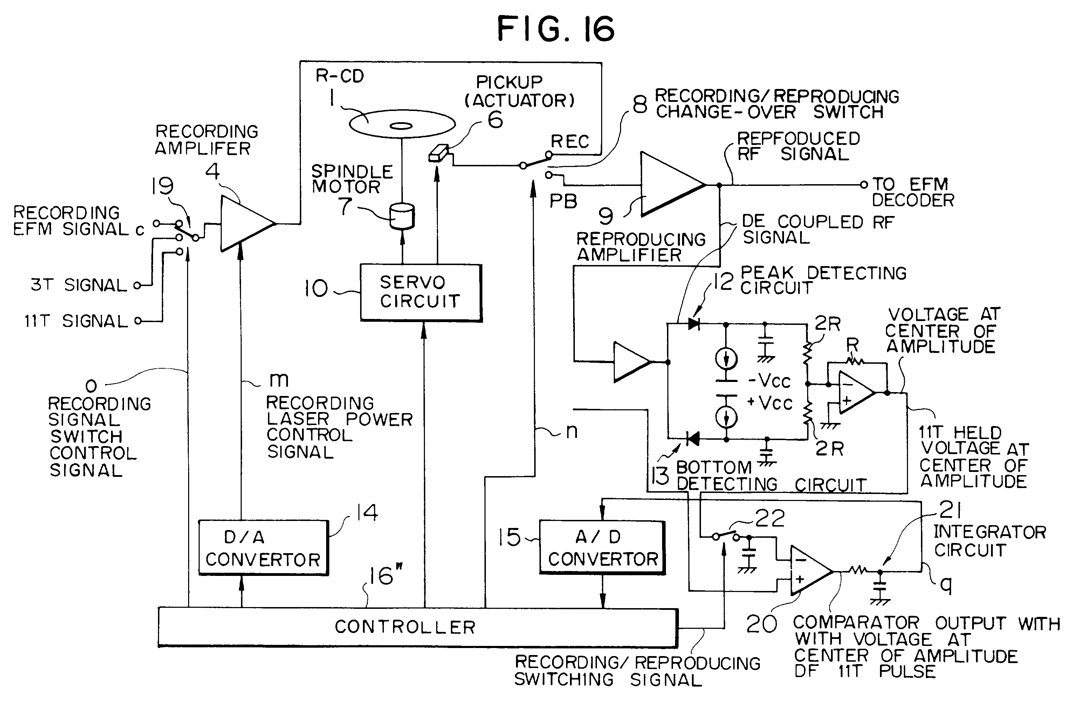

Fig. 16 shows the configuration of an optical information recording/reproducing apparatus according to a third embodiment of the present invention.

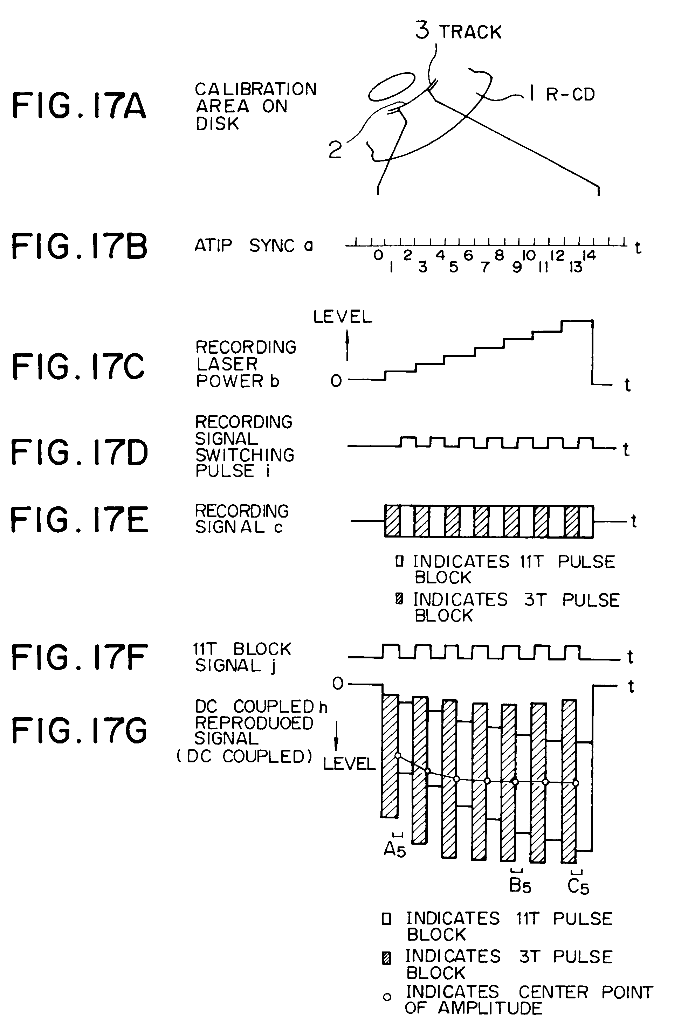

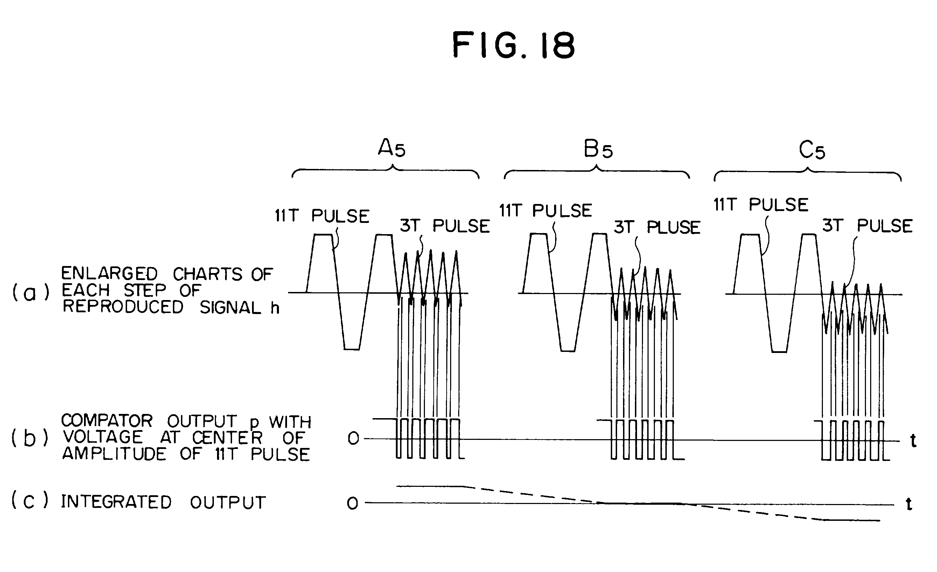

A characteristic operation of this embodiment will be explained with reference to Figs. 17A - 17G. A recording laser beam for calibration is emitted to a calibration area 2 on a R-CD 1 with a plurality of different power values in a time division manner, each for a STEP block, for setting an optimal recording laser power value, as shown in Figs. 17D - 17G. In this event, a recording pattern produced by alternately switching the 3T pulse and 11T pulse of the recording FEM signal c is recorded on the calibration area 2. Then, pits recorded on the calibration area 2 are read out for reproduction. In each STEP block, the 3T pulse is sliced in the STEP block with a reference voltage which is a voltage at the center of the amplitude of the 11T pulse in the reproduced RF signal in the STEP block. The sliced voltage derived in each STEP block is then integrated, and an optimal recording laser power value is determined to be a recording laser power value in a STEP block in which the resultant integrated voltage indicates zero. Eye patterns of A5, B5, C5 portions in Fig. 17G are shown in Fig. 18. As is understood from Fig 18, the B5 portion is determined to be the optimal power value.

The foregoing operation control is realized by constructing the recordable and reproducible R-CD player shown in Fig. 16 such that the 3T pulse and 11T pulse are selectively supplied to a recording amplifier 4 through a change-over switch 19 by a recording signal switch control signal o from a controller 16", and a signal representing a voltage at the center of the amplitude, which is generated from outputs of a peak detecting circuit 12 and a bottom detecting circuit 13, is directed through a switch 22 to a comparator 20, the comparison output P of which is integrated by an integrator circuit 21, and then an integration output q is supplied through an A/D convertor 15 to the controller 16".

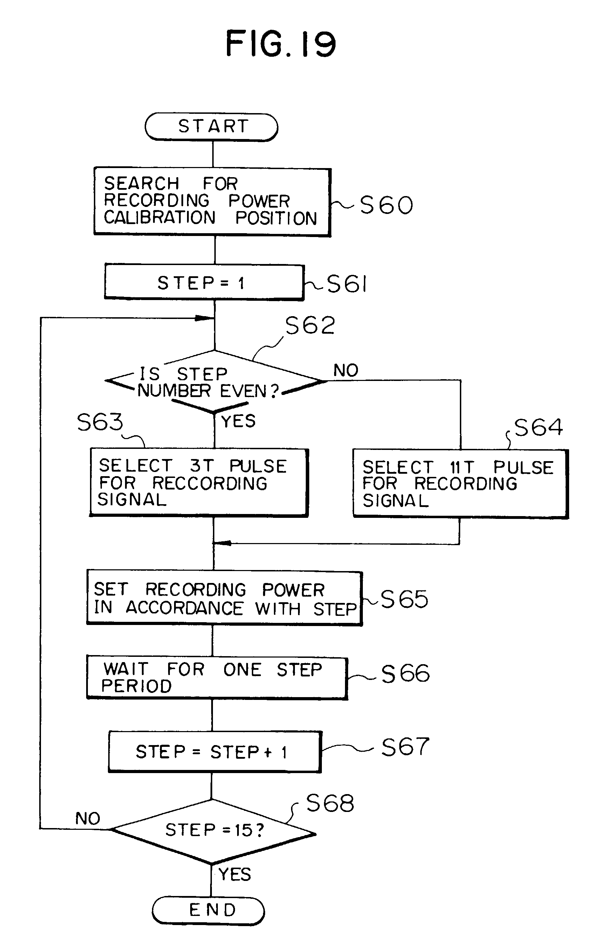

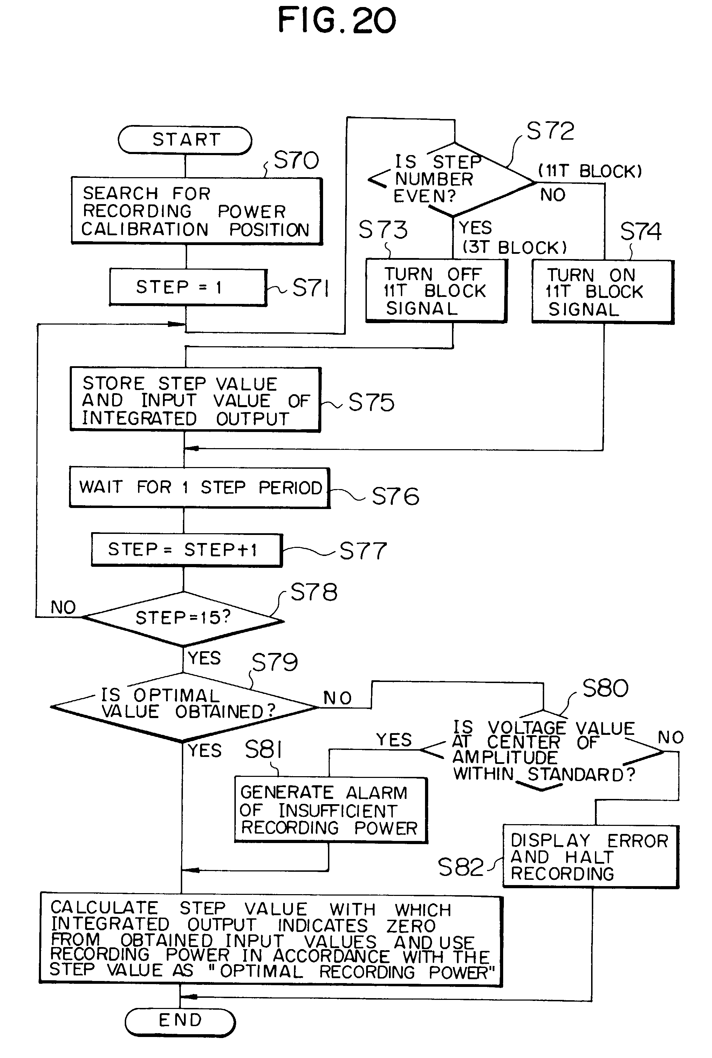

As for this operation control algorithm, a flow executed upon recording is shown at steps S60 - S68 in Fig. 19, and a flow executed upon reproduction at steps S70 - S83 in Fig. 20.

According to the third embodiment, similar to the first embodiment, when an optimal value cannot be obtained for recording laser power even at the time the recording laser power has been changed to its maximum value (when there is no STEP block in which the integrated value indicates zero), an alarm is generated to the user for warning that the recording laser power is insufficient, the recording is halted, or other processing is performed, based on a voltage value at the center of the amplitude of the reproduced signal which has been recorded with the maximum recording laser power, thus allowing the user to determine whether maintenance is required for the pickup and so on, or to previously prevent optical disks deviated from the standard from being produced. Further, a reference voltage is produced from the 11T pulse, and the 3T pulse is sliced by the reference voltage and then integrated. The optimal recording laser power value is determined to be a value obtained when the integrated value indicates zero, i.e., the duty ratio is 1/2 (50%), so that an accurate optimal value can be provided.

As explained above, according to the present invention, in an operation for detecting an optimal value for recording laser power, for example, in a detection operation where an optimal value is determined to be a recording laser power value obtained when zero is indicated by a voltage at the center of the amplitude of a reproduced signal, which has been recorded with recording laser power increased in a step manner, a determination means determines that a recording laser power value is optimal when the recording laser power value lies within a predetermined range, and zero is indicated by a voltage at the center of the amplitude of a reproduced signal which has been recorded with the recording laser power value. If the optimal value cannot be obtained even at the time the recording laser power has been changed to its maximum value, for example, an alarm is generated to the user for warning that the recording laser power is insufficient, the recording is halted, or other processing is performed, based on a voltage value at the center of the amplitude of a reproduced signal which has been recorded with the maximum recording laser power, thus providing an optical information recording/reproducing apparatus which allows the user to determine whether maintenance is required for the pickup and so on, or to previously prevent optical disks deviated from the standard from being produced.

## Claims

1. An optical information recording/reproducing apparatus for recording and reproducing signals on and from an optical disk (1), comprising:
means (4) for recording a predetermined recording signal for calibration on said optical disk (1) with a series of plural recording power levels as the time elapses;
means (6) for reading said recording signal from said optical disk to generate a reproduced signal;
means (12,13) for detecting a voltage at the center of the amplitude of said reproduced signal,
wherein a means (16) is provided for determining whether an optimal value of the recording power level based on the voltage at the center of the amplitude is obtained or not and a display means (17) for displaying that the recording power level is an optimal value or not.

2. Apparatus according to claim 1,
further comprising alarming means, wherein alarm is generated, if the value obtained is within a predetermined range and no optimal value is determined.

3. Apparatus according to claim 1,
wherein an error is displayed and recording is interrupted when the value obtained is not within a predetermined range.

## Patentansprüche

1. Optisches Informationsaufzeichnungs- und Wiedergabegerät zum Aufzeichnen und Wiedergeben von Signalen auf sowie von einer optischen Platte (1), aufweisend:
Eine Einrichtung (4) zum Aufzeichnen eines vorbestimmten Aufzeichnungssignals zur Kalibration auf der optischen Platte (1) mit einer Reihe von mehreren Aufzeichnungspegeln mit Ablauf der Zeit;
eine Einrichtung (6) zum Lesen des Aufzeichnungssignals von der optischen Platte zum Erzeugen eines wiedergegebenen Signals;
eine Einrichtung (12, 13) zum Ermitteln einer Spannung im Zentrum der Amplitude des wiedergegebenen Signals,
wobei eine Einrichtung (16) zum Ermitteln vorgesehen ist, ob ein optimaler Wert des Aufzeichnungspegels auf Grundlage der Spannung im Zentrum der Amplitude gewonnen ist oder nicht, und eine Anzeigeeinrichtung (17) zum Anzeigen, daß der Aufzeichnungsleistungspegel ein optimaler Wert ist oder nicht.

2. Gerät nach Anspruch 1,
außerdem aufweisend eine Alarmgabeeinrichtung, wobei ein Alarm erzeugt wird, wenn der gewonnene Wert innerhalb eines vorbestimmten Bereichs liegt und kein optimaler Wert ermittelt ist.

3. Gerät nach Anspruch 1, wobei ein Fehler angezeigt und die Aufzeichnung unterbrochen wird, wenn der gewonnene Wert nicht innerhalb eines vorbestimmten Bereichs liegt.

## Revendications

1. Dispositif d'enregistrement/ reproduction optiques d'informations servant à enregistrer et reproduire des signaux sur et à partir d'un disque optique (1), comprenant:
un moyen (4) servant à enregistrer un signal d'enregistrement prédéterminé pour un étalonnage sur ledit disque optique (1) avec une série de plusieurs niveaux de puissance d'enregistrement au fil du temps;
un moyen (6) servant à extraire ledit signal d'enregistrement dudit disque optique pour produire un signal reproduit;
un moyen (12, 13) servant à détecter une tension au centre de l'amplitude dudit signal reproduit;
un moyen (16) étant prévu pour déterminer si une valeur optimale du niveau de puissance d'enregistrement basée sur la tension au centre de l'amplitude est ou n'est pas obtenue; et
un moyen d'affichage (17) servant à afficher que le niveau de la puissance d'enregistrement est ou n'est pas une valeur optimale.

2. Dispositif selon la revendication 1,
comprenant en outre un moyen d'alerte, une alerte étant produite si la valeur obtenue est comprise dans des limites prédéterminées et si aucune valeur optimale n'est determinée.

3. Dispositif selon la revendication 1,
dans lequel un message d'erreur est affiché et l'enregistrement est interrompu lorsque la valeur obtenue n'est pas comprise dans des limites prédéterminées.
